# EUROPEAN PATENT APPLICATION

(11) **EP 1 241 212 A2**
(43) Date of publication of application: **18.09.2002**
(21) Application number: 02005268.4
(22) Date of filing: 11.03.2002
(51) Int. Cl.: C08K 5/20, C08L 21/00, B60C 1/00

(54) **Tire with rubber sidewall insert which contains aryl citraconamic acid in the insert rubber composition**

(30) Priority: 15.03.2001 US 810024
(71) Applicant: THE GOODYEAR TIRE & RUBBER COMPANY, Akron, Ohio 44316-0001 (US)
(72) Inventor: D'Sidocky, Richard Michael, Ravenna, Ohio 44266 (US); Widemann, Lawson Gibson, Hudson, Ohio 44236 (US); Burlett, Donald James, Wadsworth, Ohio 44281 (US)
(74) Representative: Leitz, Paul

(57) **Abstract**

This invention relates to tires which have a rubber insert within the tire sidewall of a rubber composition which contains at least one of N,N'-(m-phenylene) bis citraconamic acid and N,N'-(m-xylylene) bis citraconamic acid. Such rubber insert is preferably of a stiff rubber composition which helps to support the weight of the vehicle to which the tire is mounted in situations where there is a loss of air pressure within the tire cavity. During periods of operation after loss of air pressure, the rubber insert is intended to aid in supporting a significant amount of the load assumed by the tire which leads to an internal generation of heat with the insert rubber composition, with an accompanying rise of temperature of the insert itself. It is therefore important that the rubber composition of such rubber insert have a high degree of heat durability under conditions of working at the elevated temperature.

## Description

### Field of the Invention

This invention relates to tires which have a rubber insert within the tire sidewall of a rubber composition which contains at least one of N,N'-(m-phenylene) bis citraconamic acid and N,N'-(m-xylylene) bis citraconamic acid. Such rubber insert is preferably of a stiff rubber composition which helps to support the weight of the vehicle to which the tire is mounted in situations where there is a loss of air pressure within the tire cavity. During periods of operation after loss of air pressure, the rubber insert is intended to aid in supporting a significant amount of the load assumed by the tire which leads to an internal generation of heat with the insert rubber composition, with an accompanying rise of temperature of the insert itself. It is therefore important that the rubber composition of such rubber insert have a high degree of heat durability under conditions of working at the elevated temperature.

### Background of the Invention

Some pneumatic tires contain rubber inserts within their sidewalls for various purposes, usually to aid in stiffening the tire sidewall.

A purpose of stiffening a tire sidewall by inclusion of a relatively stiff rubber insert within the sidewall itself might for a tire's handling such as enhancing a tire's dimensional stability, particularly the tire's cornering ability. Use of sidewall inserts for tires are well known to those having skill in such art.

Another purpose of stiffening a tires' sidewall with a relatively stiff rubber insert within the sidewall might be to aid in supporting the tire if the tire should loose its inflation pressure due to, for example, a puncture or inflation valve failure.

Various tire sidewall constructions which may include various inserts have historically been proposed. For example, see U.S. Patent Nos. 5,368,082, 5,427,166, 5,511,599.

U.S. Patent No. 5,696,188 discloses rubber compounds containing N,N'-(m-phenylene)bis citraconamic acid and/or N,N'-(m-xylylene)bis citraconamic acid as anti-reversion agents. Such rubber compounds can be used in tires. They may be preferably used as vulcanizates in sidewall, carcass ply or overlay compounds for tires. Such materials may be prepared by condensing m-phenylene diamine or m-xylylene diamine with citraconic anhydride.

U.S. Patent No. 5,728,757 discloses rubber compositions, which can be used in tires, which contain zinc salts prepared by condensing m-phenylene diamine with citraconic anhydride to form N,N'-(m-phenylene) bis citraconamic acid which, in turn is reacted with a zinc salt such as, for example, ZnCl₂.

In the description of this invention, the terms "rubber" and "elastomer" if used herein, may be used interchangeably, unless otherwise prescribed. The terms "rubber composition", "compounded rubber" and "rubber compound", if used herein, are used interchangeably to refer to "rubber which has been blended or mixed with various ingredients and materials" and such terms are well known to those having skill in the rubber mixing or rubber compounding art.

In the description of this invention, the term "phr" refers to parts of a respective material per 100 parts by weight of rubber, or elastomer. The terms "rubber" and "elastomer" may be used interchangeably unless otherwise indicate. The terms "cure" and "vulcanize" may be used interchangeably unless otherwise indicated.

### Summary of the Invention

In accordance with this invention, a tire is provided which is comprised of a generally toroidal-shaped carcass with an outer circumferential tread, two spaced apart beads, a carcass comprised of at least one carcass ply extending substantially from bead to bead and a pair of spaced apart sidewalls each of which extend radially from and connect the peripheral edges of said tread to a respective bead; wherein said tread is designed to be ground-contacting, wherein said sidewalls contain at least one internal rubber insert positioned within said sidewall and positioned radially inward from at least one of said carcass ply(ies) and wherein the insert is a sulfur cured rubber composition comprised of, based on parts by weight per 100 parts by weight rubber (phr);
(A) 100 phr of at least one diene-based elastomer,
(B) from 25 to about 100, alternately about 35 to about 90, phr of reinforcing filler comprised of
   (1) from zero to about 100, alternately about 10 to about 90 phr of rubber reinforcing carbon black, and
   (2) from zero to about 100, alternately about 10 to about 90 phr of aggregates of precipitated silica having hydroxyl groups (e.g. silanol groups) on their surface,
(C) about 0.1 to about 15, alternately about 5 to about 10 phr of coupling agent for said silica, if silica is used, said coupling agent having a moiety reactive with said hydroxyl groups on the surface of said silica and another moiety interactive with at least one of said elastomers,
(D) about 1 to about 10, alternately about 2 to about 6, phr of a citraconamic acid selected from of N,N'-(m-phenylene) bis citraconamic acid and N,N'-(m-xylylene) bis citraconamic acid and mixtures thereof and excluding zinc salts of said citraconamic acids.

In one aspect of the invention, said tire is comprised of a tread, a casing with two sidewalls, two annular beads, a radial ply structure extending between the two annular beads and a belt structure located between the tread and the radial ply structure, the radial ply structure being comprised of:
(A) an inner radial ply having metal reinforcement cords capable of supporting compressive loads under runflat operating conditions;
(B) an outer radial ply having organic fiber reinforcement cords capable of supporting tensile loads under runflat operating conditions; and
(C) said internal sidewall insert having a neutral bending axis there through, the insert being circumferentially disposed between the inner and outer radial plies and in a flex area of each sidewall, such that the neutral bending axis is located further from the outer ply under runflat operating conditions for reducing the flexure of the sidewall.

Such N,N'-(m-phenylene) bis citraconamic acid may be prepared, for example, by reaction of m-phenylene diamine with citraconic anhydride and such N,N'-(mxylylene) bis citraconamic acid may be prepared, for example, by reaction with m-xylylene diamine with citraconic anhydride as mentioned in U.S. Patent No. 5,696,188.

While such materials are described in U.S. Patent No. 5,696,188 as having anti-reversion capabilities for various rubber compositions, it is unclear what, if any, such materials may have upon physical properties for a tire sidewall insert upon working the insert at elevated temperatures without an experimental trial for the insert rubber composition itself.

Preferably, said insert rubber composition is exclusive of zinc salts of citraconamic acids because the anti-reversion mechanism for this invention requires the rubber-reactive bis citraconamic groups.

A significant aspect of the invention is the ability of the bis citraconamic acid groups to re-crosslink rubber by "re-building" broken sulfur-to-sulfur bonds. This is considered herein to be significant because the bis citraconamic acid crosslinks are stable carbon-to-carbon bonds that will not readily break under high heat generated as the sidewall insert rubber composition is utilized under tire working conditions where heat durability is a significant factor.

It is to be appreciated that the insert is sulfur co-cured with the tire assembly of said tread and carcass as a whole. Preferably, the insert(s) have a maximum thickness at a location about midway between the bead portions and the tread in the sidewall region of the tire.

In the practice of this invention, a significant function of the rubber composition-based fillers in the sidewall portion of the tire is to stiffen/support the sidewall structure when the tire is operated without inflation pressure.

The rubber composition-based inserts are elastomeric in nature and the rubber composition may have physical properties designed to enhance inflated ride performance while also providing support for the assisting the tire's run-flat durability. The inserts, if desired, may also be individually reinforced with cords or short fibers. Thus, one or more of such inserts may be so-reinforced.

The shape of the sidewall insert may be in a substantially crescent shaped form. This is intended to also include an entrunkated crescent shape, particularly where the entrunkated portion of the crescent-shaped filler is juxtapositioned to or at least in the region of the tire's bead portion.

In further practice of one aspect of the invention, said tire carcass may have from one to three plies comprised of a first axially inner ply and optionally one or two additional plies as a second ply and third ply, respectively; each additional ply positioned sequentially axially outward from said first ply in the sidewall region of the tire.

In accordance with one aspect of this invention, said tire contains one ply in its carcass wherein said tire sidewall insert is juxtapositioned to and axially inward of said ply in the sidewall region of the tire.

In accordance with another aspect of this invention, said tire contains, in its carcass, an axially inner first ply and a second ply axially outward from the first ply; wherein said tire sidewall insert is juxtapositioned to and axially inward of said first ply, in the sidewall region of the tire.

In accordance with a further aspect of this invention, said tire contains, in its carcass, an axially inner first ply and an axially outer second ply; wherein said tire sidewall insert is juxtapositioned to and interposed between said first and second ply, in the sidewall region of the tire.

In accordance with another aspect of this invention, said tire contains, in its carcass, an axially inner first ply and an axially outer second ply; wherein one of said inserts is juxtapositioned to and interposed between said first and second ply, in the sidewall region of the tire, and another of said tire sidewall inserts is juxtapositioned to and axially inward of said first ply, in the sidewall region of the tire.

In accordance with a further aspect of this invention, said tire contains, in its carcass, an axially inner first ply, a second ply axially outward from said first ply and a third ply axially outward from said second ply; wherein said tire sidewall insert is juxtapositioned to and axially inward of said first ply, in the sidewall region of the tire.

In accordance with an additional aspect of this invention, said tire contains, in its carcass, an axially inner first ply, a second ply axially outward from said first ply and a third ply axially outward from said second ply; wherein said tire sidewall insert is juxtapositioned to and interposed between (a) said first and second plies and/or (b) said second and third plies, in the sidewall region of the tire.

In accordance with a further aspect of this invention, said tire contains, in its carcass, an axially inner first ply, a second ply axially outward from said first ply and a third ply axially outward from said second ply; wherein said tire sidewall insert is juxtapositioned to and interposed between (a) said first and second plies and/or (b) said second and third plies, in the sidewall region of the tire and, also, said tire sidewall insert juxtapositioned to and axially inward of the innermost of said plies.

In one embodiment of the invention, the innermost ply, or plies, has synthetic or textile cord reinforcement of polyester, nylon, rayon or aramid, preferably nylon; while the outermost ply preferably has aramid, carbon fiber, fiberglass or metal cord reinforcement, preferably brass and/or zinc-coated steel cords.

Therefore, in a more limited embodiment of the invention, the first ply has reinforcing cords of nylon, an aramid fiber, and the second and additional plies are steel cords.

For this invention, the term "ply" is contemplated to include cord reinforced plies which extend entirely, or continuously, from bead-to-bead and to include plies which do not extend entirely from one bead to the opposite bead. It is, however, contemplated that at least one ply must extend from one bead to the opposite bead, preferably a radial ply. A second ply can therefore, if desired, extend from a bead to just laterally under one or more of the reinforcing belts of the belt structure and therefore not extend completely, or continuously, from bead to bead. It is understood that such ply construction is will known to those having skill in the tire art.

In one aspect of the invention, the outermost ply preferably has cords of a higher modulus (i.e., steel cords) and the innermost ply, or plies, have cords of a lower modulus (i.e., nylon or rayon).

In one aspect of the invention, at least one ply, preferably the innermost ply, extends from bead to bead and wraps around the beads. Alternatively, where two or more plies are used, at least one of the additional plies, while extending from bead to bead, does not actually wrap around the beads.
However, it is to be appreciated that a sidewall insert with a high degree of stiffness would normally be expected to generate excessive internal heat during service conditions (operating as tires on a vehicle running under load and/or without internal inflation pressure), particularly when the rubber composition stiffness is achieved by a rather conventional method of simply increasing its carbon black content. Such internal heat generation within the rubber composition typically results in a temperature increase of the stiff rubber so that it is important that the sidewall insert's rubber composition have good heat durability.

The hysteresis of the rubber composition of the sidewall insert is a measure of its tendency to generate internal heat under service conditions. Relatively speaking, a rubber composition with a lower hysteresis property generates less internal heat under service conditions than an otherwise comparable rubber composition with a substantially higher hysteresis. Thus, in one aspect, a relatively low hysteresis is desired for the rubber composition sidewall insert.

Hysteresis is a term for heat energy expended in a material (e.g., cured rubber composition) by applied work and low hysteresis of a rubber composition is indicated by a relatively high rebound and relatively low tangent delta (Tan Delta) property values.

Accordingly, it is important that the rubber compositions for the sidewall inserts of this invention have the properties of both relatively high stiffness and low hysteresis.

In practice, the diene based elastomer for the sidewall insert may be selected from, for example, cis 1,4-polyisoprene rubber (natural or synthetic rubber), cis 1,4-polybutadiene rubber, isoprene/butadiene copolymer rubber, styrene/butadiene copolymer rubber, styrene/isoprene/butadiene terpolymer rubber and styrene/isoprene copolymer rubber and high vinyl polybutadiene rubber having a vinyl 1,2-content in a range of from about 30 to about 90 percent.

Preferably the sidewall insert rubber composition is blend of at least two elastomers. For example, the sidewall insert may be comprised at least two elastomers selected from cis 1,4-polybutadiene rubber and cis 1,4-polyisoprene natural rubber. For example, such elastomers may be comprised of from 75 to 85 phr of natural rubber and, correspondingly, 15 to 25 phr of cis-1,4-polybutadiene rubber.

It should readily be understood by one having skill in the art that rubber compositions for components of the pneumatic tire, including the fillers can be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as rubber processing oils, resins including tackifying resins, silicas and plasticizers, fillers, pigments, or other materials such as tall oil resins, zinc oxide, waxes, antioxidants and antiozonants, peptizing agents and reinforcing materials such as, for example, the indicated carbon black and silica, particularly precipitated silica. As known to those skilled in the art, depending on the intended use of the sulfur vulcanizable and sulfur-vulcanized materials (rubbers), the certain additives mentioned above are selected and commonly used in conventional amounts.

Typical amounts of resins, if used, including tackifier resins and stiffness resins, if used, including unreactive phenol formaldehyde tackifying resins and, also stiffener resins of reactive phenol formaldehyde resins and resorcinol or resorcinol and hexamethylene tetramine, may collectively comprise about 1 to 10 phr, with a minimum tackifier resin, if used, being 1 phr and a minimum stiffener resin, if used, being 3 phr. Such resins may sometimes be referred to as phenol formaldehyde-type resins. Typical amounts of processing aids comprise about 4 to about 10.0 phr. Typical amounts of antioxidants comprise 1 to about 5 phr. Representative antioxidants may be, for example, diphenyl-p-phenylenediamine and others, such as those disclosed in The Vanderbilt Rubber Handbook (1978), pages 344-346. Suitable antiozonant(s) and waxes, particularly microcrystalline waxes, may be of the type shown in The Vanderbilt Rubber Handbook (1978), Pages 346 and 347. Typical amounts of antiozonants comprise 1 to about 5 phr. Typical amounts of stearic acid and/or tall oil fatty acid may comprise about 1 to about 3 phr. Typical amounts of zinc oxide comprise about 2 up to about 8 or 10 phr. Typical amounts of waxes comprise 1 to about 5 phr. Typical amounts of peptizers comprise 0.1 to about 1 phr. The presence and relative amounts of the above additives are not an aspect of the present invention, so long as the hardness and modulus value requirements of the filler(s) used in the tire sidewalls in the practice of this invention.

The vulcanization of the rubber composition(s) is/are conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from about 0.5 to about 8 phr with a range of from 2 to about 5 being preferred for the stiff rubbers desired for use in this invention.

Accelerators are used to control the time and/or temperature required for vulcanization and to improve the properties of the vulcanizate. In one embodiment, a single accelerator system may be used; i.e., primary accelerator. Conventionally, a primary accelerator is used in amounts ranging from about 0.5 to about 3 phr. In another embodiment, combinations of two or more accelerators in which a primary accelerator is generally used in the larger amount (0.5 to about 2 phr), and a secondary accelerator which is generally used in smaller amounts (0.05 to 0.50 phr), in order to activate and to improve the properties of the vulcanizate. Combinations of such accelerators have historically been known to produce a synergistic effect of the final properties of sulfurcured rubbers and are often somewhat better than those produced by use of either accelerator alone. In addition, delayed action accelerators may be used which are less affected by normal processing temperatures but produce satisfactory cures at ordinary vulcanization temperatures. Representative examples of accelerators include amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound, although a second sulfenamide accelerator may be used. In the practice of this invention, one and sometimes two or more accelerators are preferred for the high stiffness rubbers.

The tire, particularly a run-flat tire, containing the sidewall insert of this invention can be built, shaped, molded and cured by various methods that will be readily apparent to those having skill in the art. In general, the runflat tires of this invention can be manufactured using standard techniques with, of course, the exception that the insert therein contains N,N'-(m-phenylene) bis citraconamic acid and N,N'-(m-xylylene) bis citraconamic acid and mixtures thereof.

In a highly preferred embodiment, the first ply has synthetic or textile cords of polyester, nylon, rayon or aramid; while the second ply, most preferably, has aramid cords or metal cords; most preferably, steel cords. The first and second inserts preferably have a cross-sectional shape and material properties selected to enhance inflated ride performance while insuring runflat durability. The inserts can also be reinforced with cords or short fibers.

This invention is illustrated by the following examples that are merely for the purpose of illustration and are not to be regarded as limiting the scope of the invention or the manner in which it can be practiced. Unless specifically indicated otherwise, parts and percentages are, which may be rounded, given by weight.

### EXAMPLE I

Sulfur curable rubber compositions are prepared which are comprised of cis 1,4-polybutadiene rubber and cis 1,4-polyisoprene natural rubber and both carbon black and precipitated silica reinforcing fillers.

Control Sample A is provided as a control rubber composition comprised of said cis 1,4-polybutadiene rubber and cis 1,4-polyisoprene rubber.

Sample B is the rubber composition of Control Sample A except that Sample B contains N,N'-(m-phenylene)bis citraconamic acid.

Sample C is the rubber composition of Control Sample A except that Sample C contains N,N'-(m-xylylene)bis-citraconamic acid.

The Samples were prepared by mixing the ingredients in an internal rubber mixer in a sequential series of non-productive (without sulfur and accelerators) mixing steps and a final productive (with sulfur and accelerator addition at a lower mix temperature) mixing step. The rubber compositions were dumped from the rubber mixer after each mixing step, sheeted out from an open mill and allowed to cool to below 40°C after each mixing step. The non-productive mixing steps were for about 5 minutes to a temperature of about 160°C. The productive mixing step was for about 2 minutes to a temperature of about 115°C.

Table 1 illustrates the ingredients used for preparing the rubber compositions of Control Sample A, Sample B and Sample C.

**Table 1**

| Non-Productive Mixing Step (to 160°C) Common Materials | Control | | |
|---|---|---|---|
| | Sample A | Sample B | Sample C |
| Polybutadiene rubber¹ | 20 | 20 | 20 |
| Natural rubber | 80 | 80 | 80 |
| Carbon black² | 60 | 60 | 60 |
| Silica³ | 5 | 5 | 5 |
| Coupling Agent⁴ | 1 | 1 | 1 |
| Antioxidant⁵ | 1 | 1 | 1 |
| Antioxidant⁶ | 1.5 | 1.5 | 1.5 |
| Antioxidant⁷ | 0.8 | 0.8 | 0.8 |
| Fatty acid⁸ | 1 | 1 | 1 |
| Paraffinic processing oil | 4 | 4 | 4 |
| Phenolic tackifier | 2 | 2 | 2 |
| Dithiodipropionic acid | 1.5 | 1.5 | 1.5 |
| Zinc oxide | 6 | 6 | 6 |

| Productive Mixing Step (to 115°C) | | | |
|---|---|---|---|
| Zinc oxide | 2 | 2 | 2 |
| Accelerator(s)⁹ | 2.5 | 2.5 | 2.5 |
| Sulfur¹⁰ | 4 | 4 | 4 |
| N,N'-(m-phenylene)bis citraconamic acid¹¹ | 0 | 2.5 | 0 |
| N,N'-(m-xylylene)bis-citraconamic acid ¹² | 0 | 0 | 2.5 |

| | | | |
|---|---|---|---|
| ¹Cis 1,4-polybutadiene rubber obtained as Budene 1207 from The Goodyear Tire & Rubber Company | | | |
| ²N660 carbon black, an ASTM designation | | | |
| ³Obtained as Zeopol® 8745 from the J. M. Huber Corporation | | | |
| ⁴Obtained as liquid bis-(3-triethoxysilylpropyl) tetrasulfide as Si69 from Degussa AG | | | |
| ⁵a diaryl-p-phenylenediamine type of antioxidant obtained as Wingstay® 100 from The Goodyear Tire & Rubber Company | | | |
| ⁶Polymerized 1,2-dihydro-2,2,4 trimethylquinoline | | | |
| ⁷N-(1,3 dimethylbutyl)-N'-phenyl-p-phenylene diamine | | | |
| ⁸Primarily oleic and linoleic acids | | | |
| ⁹Sulfenamide type | | | |
| ¹⁰Insoluble type of sulfur | | | |
| ¹¹Prepared by reaction of m-phenylene diamine and citraconic anhydride | | | |
| ¹²Prepared by reaction of m-xylylene diamine and citraconic anhydride | | | |

The rubber compositions of Table 1 were cured for about 14 minutes at about 160°C. Various resulting physical properties are shown in the following Table 2.

**Table 2**

| | Control | | |
|---|---|---|---|
| | Sample A | Sample B | Sample C |
| Rheometer, 191°C | | | |
| T90% cure, (minutes) | 1.73 | 1.86 | 1.8 |
| Percent reversion at 120 minutes¹ | 18.7 | 5.7 | 3.3 |

| DMA (11hertz, 3°C/min, 8% strain) | | | |
|---|---|---|---|
| E' at 190°C | 15.2 | 15.18 | 15.13 |
| E' at 230°C | 6.67 | 9.53 | 9.18 |
| Percent E' retained | 43.9 | 62.1 | 60 |
| | | | |
| Tan delta at 190°C | 0.061 | 0.066 | 0.066 |
| Tan delta at 230°C | 0.088 | 0.074 | 0.074 |
| Percent tan delta change | 44.3 | 12.1 | 12.1 |

| | | | |
|---|---|---|---|
| ¹Cure reversion measured using a Rheometer can be defined as the decrease in torque from the maximum value for a fixed period of time, expressed here, for example, as percent reversion at 120 minutes cure running time. Cure reversion is further defined by G. M. Bristow (NR Technology, 17 (1) 7, 1986). | | | |

From Table 2, it is evident that the addition of N,N'-(m-phenylene)bis citraconamic acid enabled a retention of 62 percent of the E' stiffness property of Sample B as compared to only a 44 percent retention for the Control Sample A as the temperature of the test Samples was increased from 190°C to 230°C.

From Table 2, it is also evident that the addition of the N,N'-(m-xylyylene)bis citraconamic acid enabled a retention of 60 percent of the E' stiffness property of Sample C as compared to only a 44 percent retention for the Control Sample A as the temperature of the test Samples was increased from 190°C to 230°C.

This is considered herein as being significant because the E' stiffness is maintained to a greater extend in Samples B and C as compared to Control Sample A which indicates an improved insert component.

From Table 2, it is further evident that the addition of the N,N'-(m-phenylene)bis citraconamic acid significantly lowered the hysteresis of the rubber composition as evidenced by an increase of only 12 percent for the tan delta of Sample B as compared to an increase of 44 percent for the tan delta of Control Sample A as the test temperature increased from 190°C to 230°C.

From Table 2, it is evident that the addition of the N,N'-(m-xylyylene)bis citraconamic acid significantly lowered the hysteresis of the rubber composition as evidenced by an increase of only 12 percent for the tan delta of Sample B as compared to an increase of 44 percent for the tan delta of Control Sample A as the test temperature increased from 190°C to 230°C. This is considered herein to be significant because the lowered hysteresis rubber will show lower heat build up in a tire sidewall insert.

In conclusion, it is observed from Table 2 that the rubber compositions of Sample B and Sample C have superior heat resistance properties as the temperature is increased from 190°C to 230°C as compared to Control Sample A. This is considered herein to be important in order to prevent, or at least retard, thermal degradation of an insert rubber upon elevation of its temperature.

While certain representative embodiments and details have been shown for the purpose of illustrating the subject invention, it will be apparent to those skilled in this art that various changes and modifications can be made therein without departing from the scope of the subject invention. It is, therefore, to be understood that changes can be made in the particular embodiments described which will be within the full intended scope of the invention as defined by the following appended claims.

## Claims

1. A tire **characterized by** being comprised of a generally toroidal-shaped carcass with an outer circumferential tread, two spaced apart beads, a carcass comprised of at least one carcass ply extending substantially from bead to bead and a pair of spaced apart sidewalls each of which extend radially from and connect the peripheral edges of said tread to a respective bead; wherein said tread is designed to be ground-contacting, wherein said sidewalls contain at least one internal rubber insert positioned within said sidewall and positioned radially inward from at least one of said carcass ply(ies) and wherein the insert is a sulfur cured rubber composition comprised of, based on parts by weight per 100 parts by weight rubber (phr);
(A) 100 phr of at least one diene-based elastomer,
(B) from 25 to about 100 phr of reinforcing filler as
(1) from zero to about 100 phr of rubber reinforcing carbon black, and
(2) from zero to about 100 phr of aggregates of precipitated silica having hydroxyl groups (e.g. silanol groups) on their surface,
(C) about 0.1 to about 15 phr of coupling agent for said silica, if silica is used, said coupling agent having a moiety reactive with said hydroxyl groups on the surface of said silica and another moiety interactive with at least one of said elastomers,
(D) about 1 to about 10 phr of at least one citraconamic acid selected from N,N'-(m-phenylene) bis citraconamic acid and N,N'-(m-xylylene) bis citraconamic acid and mixtures thereof exclusive of zinc salts of said citraconamic acid.

2. The tire of claim 1 **characterized in that** said aryl bis-citraconamic acid is N,N'-(m-phenylene) bis citraconamic acid.

3. The tire of claim 1 **characterized in that** said aryl bis-citraconamic acid is N,N'-(m-xylylene) bis citraconamic acid.

4. The tire of any of the preceding claims **characterized in that** said citraconamic acid is present in an amount which is within the range of about 2 phr to about 6 phr.

5. The tire of any of the preceding claims **characterized in that** the reinforcing filler is about 35 to about 90 phr of
(A) about 5 to about 85 phr of carbon black and
(B) about 5 to about 85 phr of precipitated silica

6. The tire of any of the preceding claims **characterized in that** said diene-based elastomer for said insert is selected from at least one of cis 1,4-polyisoprene rubber, styrene-butadiene rubber, cis 1,4-polybutadiene rubber, and styrene-isoprene-butadiene rubber.

7. The tire of any of the preceding claims **characterized in that** said tire is comprised of a tread, a casing with two sidewalls, two annular beads, a radial ply structure extending between the two annular beads and a belt structure located between the tread and the radial ply structure, the radial ply structure being comprised of:
(A) an inner radial ply having metal reinforcement cords capable of supporting compressive loads under runflat operating conditions;
(B) an outer radial ply having organic fiber reinforcement cords capable of supporting tensile loads under runflat operating conditions; and
(C) said internal sidewall insert having a neutral bending axis there through, the insert being circumferentially disposed between the inner and outer radial plies and in a flex area of each sidewall, such that the neutral bending axis is located further from the outer ply under runflat operating conditions for reducing the flexure of the sidewall.
